# EUROPÄISCHE PATENTANMELDUNG

(11) **EP 4 664 074 A1**
(43) Veröffentlichungstag der Anmeldung: **17.12.2025**
(21) Anmeldenummer: 25181119.6
(22) Anmeldetag: 05.06.2025
(51) Int. Cl.: G01C 23/00, G02B 27/01

(54) **VERFAHREN, STEUERPROGRAMM, COMPUTERLESBARER DATENTRÄGER UND BILDVERARBEITUNGSEINHEIT ZUM BEREITSTELLEN EINES BILDDATENSATZES SOWIE APPARATUR MIT SELBIGER**

(30) Priorität: 14.06.2024 DE 102024116831
(71) Anmelder: Airbus Defence and Space GmbH, 82024 Taufkirchen (DE)
(72) Erfinder: VOGELMEIER, Leonhard, 82024 Taufkirchen (DE)
(74) Vertreter: LKGLOBAL Lorenz & Kopf Patentanwalt Attorney at Law PartG mbB

(57) **Zusammenfassung**

Ein zum Bereitstellen eines Bilddatensatzes (D) von einer Bildverarbeitungseinheit (2) einer Apparatur (1), wie beispielsweise eines Luftfahrzeugs, an wenigstens eine Anzeigevorrichtung (11, 12) für Bediener (P) der Apparatur (1), ein Steuerprogramm (30), ein computerlesbarer Datenträger (31, 32, 33), eine Bildverarbeitungseinheit (2) für eine Apparatur (1), insbesondere ein Luftfahrzeug, werden vorgeschlagen, wobei der Bilddatensatz (D) wenigstens zwei Detailstufen (H, I, L) wenigstens eines von einem Sensormodul (23), einem Datenbankmodul (22), und/oder einem Empfangsmodul (24) bezogenen Bildelementes (E) umfasst.

## Beschreibung

### Technisches Gebiet

Die vorliegende Offenbarung betrifft ein Verfahren zum Bereitstellen eines Bilddatensatzes von einer Bildverarbeitungseinheit einer Apparatur, wie beispielsweise eines Luftfahrzeugs, an wenigstens eine Anzeigevorrichtung für Bediener der Apparatur, ein Steuerprogramm, einen computerlesbaren Datenträger, eine Bildverarbeitungseinheit für eine Apparatur und eine Apparatur, insbesondere ein Luftfahrzeug.

### Technischer Hintergrund

Verfahren zum Steuern einer Datenübertragung von egozentrischen oder exozentrischen Bilddatensätzen sind aus dem Stand der Technik bekannt.

Egozentrische Bilddatensätze werden in der Regel an kopfgehaltene Anzeigevorrichtungen, wie beispielsweise sogenannte Head-Mounted-Displays (HMD), übertragen, die ein Bediener eine Apparatur, wie beispielsweise ein Pilot, am Kopf befestigt trägt. Derartige Anzeigevorrichtungen können beispielsweise in Visiere von Helmen integriert sein, o.ä. Sie dienen dazu, dem Bediener aus seiner Eigenperspektive relevante Informationen bereitzustellen. Hingegen können apparategehaltene Anzeigevorrichtungen in Form von in ein Gehäuse oder einen Führerstand, beispielsweise ein Cockpit, integrierten Bildschirmen dazu dienen, dem Bediener Übersichtsdarstellungen bereitzustellen, wie z.B. Karten- und Navigationsmaterial sowie Instrumententafeln oder Betriebsdaten der Apparatur.

EP 3 983 870 B1 beispielsweise betrifft ein System zur Missionsvorbereitung auf der Grundlage digitaler Kartierung, das einen Missionseditor umfasst, der Missionselemente generiert, die während einer Vielzahl vorgegebener Zeitphasen variieren, und das in einem Netzwerk Folgendes umfasst: - einen Missionsserver, - einen Kartierungsserver, - einen Server zum Teilen von mindestens einem Kartenmittelpunkt und - eine Vielzahl von Augmented-Reality-Headsets, wobei mindestens eines der Augmented-Reality-Headsets, das als Master-Headset bezeichnet wird, mindestens eine Anweisung zum Ändern des Mittelpunkts generieren kann, wobei jedes Headset mindestens zwei Sätze von Höhen- und Geländekacheln vom Kartierungsserver empfangen kann, wobei der Missionsserver mit den Headsets kommuniziert, um die Missionselemente zu teilen, zu aktualisieren und sie im Laufe der Zeit variieren zu lassen.

US 10 204 453 B2 beschreibt eine Fliegermaske, die ein Augmented-Reality-Visier, Sensoren und eine Anzeige-Recheneinheit umfasst. Die Sensoren sind kommunikativ mit dem Augmented-Reality-Visier verbunden. Die Sensoren erfassen einen Teil des Cockpitbereichs eines Flugzeugs, der während eines Notfalls mit eingeschränkter Sicht von einem Besatzungsmitglied mit dem Augmented-Reality-Visier eingesehen werden kann. Die Display-Recheneinheit ist kommunikativ mit dem Augmented-Reality-Visier und den Sensoren verbunden. Die Anzeige-Recheneinheit projiziert ein vorgespeichertes Bild, das dem Teil des Cockpitbereichs vor dem Augmented-Reality-Visier zugeordnet ist. Darüber hinaus überlagert die Anzeige-Recheneinheit das vorgespeicherte Bild über den Teil des Cockpitbereichs, den das Besatzungsmitglied des Flugzeugs sieht. Das überlagerte, vorab gespeicherte Bild wird vom Besatzungsmitglied des Flugzeugs durch das Augmented-Reality-Visier betrachtet, um während des Notfalls mit verdeckter Sicht Objekte im Cockpitbereich zu identifizieren.

EP 3 100 768 A1 betrifft eine Fliegermaske, die einen ersten Satz Sensoren umfasst, der die Umgebungsluft im Cockpit und den Gesundheitszustand eines Besatzungsmitglieds überwacht, um Parameter zu erkennen, die bei dem Besatzungsmitglied Atembeschwerden verursachen, einen Sauerstoffregler, der zwischen einem Verdünnungsmodus, einem Notfallmodus und einem Umwälzmodus umschaltet, um dem Besatzungsmitglied Atemgas zuzuführen, ein

US 9 950 806 B2 befasst sich mit einem Verfahren zur Anzeige einer Außenszene auf einem Cockpit-Anzeigesystem. Das System umfasst zwei Anzeigebereiche, die entlang einer horizontalen Flugzeugachse aneinandergrenzen, und einen Prozessor, der in einem der Bereiche die Anzeige eines anfänglichen Szenenbildes aus Daten von der Avionikelektronik des Flugzeugs erzeugt, wobei die Daten den Schiebewinkel des Flugzeugs umfassen. Der Prozessor zeigt auf dem Szenenbild einen Flugpfadvektor an, der einen Punkt auf dem Szenenbild angibt, auf den das Flugzeug zusteuert. Wenn der gemessene Schiebewinkel einen Schwellenwert überschreitet, zeigt der Prozessor das ursprüngliche Szenenbild auf einem ersten Anzeigebereich und die Anzeige eines ergänzenden Außenszenenbildes auf einem zweiten Anzeigebereich an, wobei das ergänzende Szenenbild eine seitliche Erweiterung des ursprünglichen Szenenbildes darstellt. Der Prozessor zeigt außerdem den Flugpfadvektor an, der basierend auf einem Winkelwert auf einem der beiden Bilder überlagert ist.

US 8 416 151 B2 betrifft einen Satz von Ausrüstungsgegenständen für ein Flugzeug, der einen Videowandler und mindestens zwei Head-Up-Display-Geräte umfasst, wobei der Videowandler und/oder jedes HUD-Gerät in der Lage ist/sind, das vom HUD-Gerät zu projizierende Bild auf der Grundlage des Anzeigefelds des HUD-Geräts und eines oder mehrerer HUD-/Wandlerfehler zu definieren, wobei jeder HUD-/Wandlerfehler als die Differenz zwischen dem HUD-Fehler des entsprechenden HUD-Trägers um eine Richtung und dem Wandlerfehler um diese gleiche Richtung definiert ist, wobei der HUD-Fehler eines HUD-Trägers um eine Richtung die Winkeldifferenz um diese Richtung zwischen der Sichtlinie des HUD-Trägers und einer Messreferenzlinie ist, und wobei der Wandlerfehler um eine Richtung die Winkeldifferenz um diese Richtung zwischen der Sichtlinie des Wandlerträgers und einer Messreferenzlinie ist.

Bei aus dem Stand der Technik bekannten Verfahren und Systemen zu Datenübertragung an Anzeigevorrichtungen ist von Nachteil, dass sie jeweils nur einen Teilaspekt der Bedienung einer Apparatur, wie beispielsweise eines Luftfahrzeugs, betreffen. Allerdings ist insbesondere bei der Bedienung von Luftfahrzeugen in der Zukunft zu erwarten, dass Aufgabenbereiche einzelner Bediener, wie beispielsweise Piloten, sich wesentlich erweitern werden. Eine Erweiterung kann sich beispielsweise daraus ergeben, dass Kampfpiloten neben der Steuerung ihres eigenen Luftfahrzeugs in Nahkampfsituationen zusätzlich ferngesteuerte Flugdrohnen (Unmanned Air Vehicles - UAV) aus relativ weiter Entfernung vom Kampfgeschehen steuern werden müssen.

Bei derartigen vielschichtigen Aufgabenbereichen besteht das Problem, dass auf einer Seite des Spektrums bereitzustellender Ansichten egozentrische Perspektiven und der Blick auf eine reale Welt außerhalb des Cockpits mit dem menschlichen Auge in gewissen Situationen vorrangig sein können. Auf der anderen Seite des Spektrums kann in gewissen Situationen eine mithilfe von Sensoren bereitgestellte exozentrische Ansicht einer synthetischen Umgebung dominant sein müssen. Eine Herausforderung für einen Piloten besteht dann darin, vor dem Hintergrund der Unvorhersehbarkeit des Kampfgeschehens seine Wahrnehmung schnell zwischen besagten beiden Seiten des Spektrums umschalten muss.

### Beschreibung

Es kann als Aufgabe betrachtet werden, eine Aufbereitung von Bilddatensätzen umfassenden Datenströmen an Anzeigevorrichtungen zur ununterbrochenen Wahrnehmbarkeit durch Bediener von Apparaturen zu verbessern. Insbesondere kann es als Aufgabe betrachtet werden, die Handhabung einer Umschaltung zwischen situationsabhängigen Informationsspektren und/oder Perspektiven für Bediener zu vereinfachen sowie möglichst nachvollziehbar auszugestalten. Auch kann als Aufgabe betrachtet werden, ein Lage- bzw. Situationsbewusstsein bei der Bedienung von Apparaturen, insbesondere Luftfahrzeugen, zu erhöhen oder zumindest so weit aufrecht zu halten, dass es auch unter höchst komplexen Bedingungen möglichst nicht verloren geht.

Diese Aufgabe wird durch den Gegenstand des unabhängigen Anspruchs 1 sowie der nebengeordneten Ansprüche 7 bis 10 gelöst. Weitere Ausführungsformen ergeben sich aus den abhängigen Ansprüchen sowie aus der folgenden Beschreibung.

Insbesondere wird die Aufgabe gelöst durch ein Verfahren zum Bereitstellen eines Bilddatensatzes von einer Bildverarbeitungseinheit einer Apparatur, wie beispielsweise eines Luftfahrzeugs, an wenigstens eine Anzeigevorrichtung für Bediener der Apparatur, wobei der Bilddatensatz wenigstens zwei Detailstufen wenigstens eines von einem Sensormodul, einem Datenbankmodul, und/oder einem Empfangsmodul bezogenen Bildelementes umfasst.

Bei einem Steuerprogramm wird die Aufgabe dadurch gelöst, dass es Befehle umfasst, die bei der Ausführung des Steuerprogramms durch eine Bildverarbeitungseinheit diese veranlassen, ein entsprechendes Verfahren auszuführen.

Bei einem lesbaren Datenträger wird die Aufgabe gelöst, indem auf dem Datenträger ein entsprechendes Steuerprogramm gespeichert ist.

Bei einer Bildverarbeitungseinheit für eine Apparatur, wie beispielsweise ein Luftfahrzeug, wird diese Aufgabe dadurch gelöst, dass die Bildverarbeitungseinheit zur Durchführung eines entsprechenden Verfahrens ausgestaltet ist und/oder einen entsprechenden computerlesbaren Datenträger umfasst.

Bei einer Apparatur, insbesondere einem Luftfahrzeug, wird diese Aufgabe dadurch gelöst, dass die Apparatur eine entsprechende Bildverarbeitungseinheit umfasst.

Wenigstens zwei Detailstufen eines Bildelementes können also gleichzeitig mit der Anzeigevorrichtung wiedergegeben werden. Verschiedene Abschnitte des Bilddatensatzes, wie beispielsweise Bildausschnitte, können mit wählbarer Detailstufe bereitgestellt werden. Detailgrade der Detailstufen können fest voneinander abgrenzbar ausgestaltet sein.

Sensormodul, Datenbankmodul und/oder Empfangsmodul können Teil der Bildverarbeitungseinheit und/oder datenübertragend mit dieser verbunden sein. Beispielsweise kann das Sensormodul auf Sensoreinrichtungen zugreifen, wie z.B. eine Kamera, ein Ortungsgerät, Infrarotsichtgerät, Nachtsichtgerät, Radargerät oder ähnliches, die als Teil des Luftfahrzeugs oder mit diesem datenübertragend verbundenen Vorrichtungen vorgesehen sein können. Dazu können entsprechende Datenerfassungseinrichtungen vorgesehen sein. Verschiedene Apparaturen können entsprechende Daten über ein Netzwerk miteinander austauschen.

Die erfindungsgemäße Lösung hat den Vorteil, dass dem Bediener, Beispielsweise einem Piloten eines Luftfahrzeugs, exakt die Bildelemente in kognitiver verarbeitbarer Weise bereitgestellt werden können, die er zum jeweiligen Zeitpunkt benötigt, nicht mehr, nicht weniger. Die Lösung macht also eine stetig zunehmende Anzahl von Datensätzen und entsprechenden Informationen, wie sie beispielsweise in Schlachtsituationen auftreten können, für den Bediener verarbeitbar. Zudem werden Wahrnehmungsgeschwindigkeit, Überblick und Orientierung in jeder Situation verbessert, um möglichst schnell und zutreffend Entscheidungen treffen zu können.

Gemäß einer Ausführungsform des Verfahrens kann vorgesehen sein, dass das wenigstens eine Bildelement Teil eines Unterdatensatzes ist, der aus einem Datenspeicher, vom Sensormodul und/oder per Datenfernübertragung bezogen wird. Der Unterdatensatz kann Teil eines vom Sensormodul bzw. einem damit verbunden Sensor erfassten Sensordatensatzes sein. Der Unterdatensatz kann ein bestimmtes Bildelement und/oder einen Bildausschnitt, wie beispielsweise einen Kartenausschnitt, darstellen. Somit lassen sich Bildelemente in Gruppen, Untergruppen, Bilddatensätzen und/oder Unterdatensätzen zusammengefasst handhaben, was deren kognitiv verarbeitbare Bereitstellung vereinfachen hilft.

Gemäß einer Ausführungsform des Verfahrens kann vorgesehen sein, dass das wenigstens eine Bildelement in mindestens einer der wenigstens zwei Detailstufen zu einer Symboldarstellung abstrahiert wird. Ein Abstrahierungsgrad der Symboldarstellung kann durch den Bediener wählbar ausgestaltet sein. Dies hilft, die Flexibilität der Informationsaufbereitung zu erhöhen und diese an die jeweiligen Bedürfnisse des Bedieners anzupassen.

Gemäß einer Ausführungsform des Verfahrens kann vorgesehen sein, dass mindestens eine der wenigstens zwei Detailstufen mindestens eine andere der wenigstens zwei Detailstufen wenigstens abschnittsweise überblendet. Die Detailstufen können sich überlagernd ausgestaltet sein. Dies hilft, bereitgestellte Bilddatensätze bzw. deren Unterdatensätze jeweiligen Anforderungen gemäß so aufzubereiten, dass sie für den Bediener verarbeitbar dargestellt werden und gleichzeitig möglichst sämtliche notwendigen Informationen beinhalten.

Gemäß einer Ausführungsform des Verfahrens kann vorgesehen sein, dass die wenigstens zwei Detailstufen vorgegeben inkrementiert sind. Mit anderen Worten können die Detailstufen und/oder entsprechend verwendete Symboldarstellungen gemäß vorgegebenen Grenzen stufenartig ineinander überführt bzw. zwischeneinander umgeschaltet werden. Dies hilft, einem Bediener die Auswahl der Detailstufen per entsprechenden Steuersignalen zu vereinfachen und unnötige Komplexität in der Bedienung zu vermeiden.

Gemäß einer Ausführungsform des Verfahrens kann vorgesehen sein, dass vom Sensormodul erfasste Objekte, Objektgruppen und/oder deren Routen bzw. Trajektorien in mindestens einer der wenigstens zwei Detailstufen als einzelnes und/oder zusammengefasstes Bildelement bereitgestellt werden. Objekte können in Gruppen zusammengefasst werden. Die Objekte und deren Gruppen können verschiedenen Detailstufen zugeordnet werden. Auf diesem Wege lassen sich beispielsweise Objektwolken erzeugen. Bei bekannten Objekten, wie beispielsweise eigenen oder alliierten Kräften, kann die Zuordnung zu einer bestimmten Gruppe unmittelbar per entsprechendem Datenaustausch erfolgen, insbesondere über ein Führungssystem. Unbekannte Objekte, wie beispielsweise Feindkräfte, können zunächst als unbekannt klassifiziert und dann im Anschluss daran identifiziert und/oder entsprechend durch manuelle Markierung und/oder maschinenlernende Algorithmen bzw. künstliche Intelligenz eingruppiert werden. Dies hilft weiter dabei, bereitgestellte Bilddatensätze bzw. deren Unterdatensätze jeweiligen Anforderungen gemäß so aufzubereiten, dass sie für den Bediener verarbeitbar dargestellt werden und gleichzeitig möglichst sämtliche notwendigen Informationen beinhalten.

Alternativ oder zusätzlich wird die Aufgabe gelöst durch ein Verfahren zum Steuern einer Datenübertragung eines egozentrischen Bilddatensatzes und eines exozentrischen Bilddatensatzes von einer Bildverarbeitungseinheit einer Apparatur, wie beispielsweise eines Luftfahrzeugs, an wenigstens eine kopfgehaltene Anzeigevorrichtung und wenigstens eine apparategehaltene Anzeigevorrichtung für Bediener der Apparatur, wobei per vom Bediener auslösbarem Steuersignal wenigstens ein Unterdatensatz aus dem egozentrischen Bilddatensatz wahlweise an die apparategehaltene Anzeigevorrichtung und/oder wenigstens ein Unterdatensatz aus dem exozentrischen Bilddatensatz wahlweise an die kopfgehaltene Anzeigevorrichtung gesendet werden kann.

Bilddatensätze bzw. entsprechende Bildelemente für sowohl egozentrische als auch exozentrische Ansichten können also wahlweise an die kopfgehaltene und/oder die apparategehaltene Anzeigevorrichtung gesendet werden. Eine vom Bediener möglichst intuitiv steuerbare Bedieneinheit kann das Steuersignal erfassen und an die Bildverarbeitungseinheit senden. Somit dann der Bediener jeweiligen Anforderungen gemäß zwischen egozentrischen und exozentrischen Darstellungen umschalten, beispielsweise indem er sie wahlweise von der Bildverarbeitungseinheit an die kopfgehaltene Anzeigevorrichtung und/oder die apparategehaltene Anzeigevorrichtung übertragen lässt. Die Unterdatensätze können dabei jeweils vorbestimmte Ansichten oder Ausschnitte daraus wiedergeben und zumindest abschnittsweise komplementär und/oder redundant zueinander ausgestaltet sein, beispielsweise indem sie verschiedene Ansichten eines gleichen Objektes und/oder Umgebungsfeldes wiedergeben. Bilddatensätze und/oder Unterdatensätze können von der Bildverarbeitungseinheit zusammengesetzt und/oder generiert und beispielsweise Kartendarstellungen sowie darin angezeigte Elemente umfassen.

Diese Lösung hat den Vorteil, dass ein vollkommen neuartiges Konzept einer Menschmaschineschnittstelle bereitgestellt werden kann, die sich an jeweilige Erfordernisse relativ weiter und vielschichtiger Aufgabenbereiche angepasst werden kann. Insbesondere können für den Bediener kognitiv nachvollziehbare Übergänge zwischen situationsabhängigen Informationsspektren und/oder Perspektiven bereitgestellt. Ein bereitgestellter Informationsgehalt lässt sich den jeweiligen Anforderungen gemäß anpassen. Auf diesem Wege lassen sich kognitive Unterbrechungen vermeiden, welche Leistungsfähigkeit reduzieren, Beurteilungen beeinträchtigen und/oder Fehler bewirken könnten.

Gemäß einer Ausführungsform des Verfahrens kann vorgesehen sein, dass wenigstens ein Bildelement aus mindestens einem der Unterdatensätze von einem Sensormodul bezogen wird. Ein Sensormodul, Datenbankmodul und/oder Empfangsmodul können Teil der Bildverarbeitungseinheit und/oder datenübertragend mit dieser verbunden sein. Beispielsweise kann das Sensormodul auf Sensoreinrichtungen zugreifen, wie z.B. eine Kamera, ein Ortungsgerät, Infrarotsichtgerät, Nachtsichtgerät, Radargerät oder ähnliches, die als Teil des Luftfahrzeugs oder mit diesem datenübertragend verbundenen Vorrichtungen vorgesehen sein können. Dazu können entsprechende Datenerfassungseinrichtungen vorgesehen sein. Verschiedene Apparaturen können entsprechende Daten über ein Netzwerk miteinander austauschen. Auf diesem Wege lassen sich Bilddatensätze bzw. deren Unterdatensätze den jeweiligen Anforderungen gemäß synthetisch zusammensetzen und bereitstellen.

Gemäß einer Ausführungsform des Verfahrens kann vorgesehen sein, dass das wenigstens eine Bildelement zu einer Symboldarstellung abstrahiert wird, die gleichzeitig im egozentrischen Bilddatensatz und im exozentrischen Bilddatensatz enthalten ist. Ein abstrahierungsgrad der Symboldarstellung kann stufenlos einstellbar ausgestaltet sein. Der egozentrische und/oder exozentrische Datensatz können bzw. kann aus vollständig abstrahierten Symboldarstellungen gebildet sein. Somit lässt sich eine Vielzahl von Informationsgehalten aus bzw. in verschiedenen Bezugssystemen vom Bediener ununterbrochen kognitiv wahrnehmbar aufbereiten.

Gemäß einer Ausführungsform des Verfahrens kann vorgesehen sein, dass ein an die kopfgehaltene Anzeigevorrichtung gesendeter Unterdatensatz einen an die apparategehaltene Anzeigevorrichtung gesendeten Unterdatensatz wenigstens abschnittsweise überblendet. Die kopfgehaltene Anzeigevorrichtung kann die apparategehaltene Anzeigevorrichtung zu einem beliebigen Grad überblenden, bis hin zu einer vollständigen Überblendung. Mit anderen Worten kann die kopfgehaltene Anzeigevorrichtung die apparategehaltene Anzeigevorrichtung ausblenden. Alternativ oder zusätzlich können die Unterdatensätze derart komplementär zueinander ausgestaltet sein, dass aus dem zur kopfgehaltenen Anzeigevorrichtung gesendeten Unterdatensatz die apparateseitige Anzeigevorrichtung zumindest abschnittsweise ausgestanzt erscheint. Mit anderen Worten kann zumindest in den Augen des Bedieners der an die apparategehaltene Anzeigevorrichtung gesendete Unterdatensatz in den an die kopfgehaltene Anzeigevorrichtung gesendeten Unterdatensatz integriert erscheinen. Somit lässt sich eine Aufbereitung einer vom Bediener ununterbrochen kognitiv wahrnehmbarer Vielzahl von Informationsgehalten aus bzw. in verschiedenen Bezugssystemen weiter verbessern, insbesondere indem ein Sichtfeld des Bedieners voll ausgeschöpft und darin angeordnete Bilddatensätze bzw. deren Unterdatensätze unter stetigem Bezug zueinander jeweiligen Anforderungen gemäß an kopfgehaltene und/oder apparategehaltene Anzeigevorrichtung gesendet werden können.

Gemäß einer Ausführungsform des Verfahrens kann vorgesehen sein, dass an die kopfgehaltene Anzeigevorrichtung und/oder an die apparategehaltene Anzeigevorrichtung gesendete Unterdatensätze aus dem egozentrischen Bilddatensatz und/oder aus dem exozentrischen Bilddatensatz für den Bediener stufenlos über- überblendet werden bzw. im Wesentlichen stufenlos zwischen diesen umgeblendet wird. Mit anderen Worten können egozentrische Bilddatensätze in exozentrische Bilddatensätze übergehen und umgekehrt. Somit kann einem Bediener insbesondere beim Wechsel von exozentrischen zu egozentrischen Ansichten die Orientierung in den Ansichten vereinfacht bzw. vermieden werden, dass er die Orientierung verliert.

Gemäß einer Ausführungsform des Verfahrens kann vorgesehen sein, dass ein Unterdatensatz aus dem egozentrischen Bilddatensatz und/oder ein Unterdatensatz aus dem exozentrischen Bilddatensatz wenigstens zwei verschiedenen Betriebszonenzonen der Apparatur zugeordnet sind bzw. ist und je nach der Bildverarbeitungseinheit vorgegebener Betriebszone an die kopfgehaltene Anzeigevorrichtung und/oder die apparategehaltene Anzeigevorrichtung gesendet werden können bzw. kann. Die Betriebszonen können jeweiligen Risikostufen zum Betrieb der Apparatur zugeordnet sein. Somit lassen sich in jeweiligen Betriebszonen mit unterschiedlichen Risikostufen jeweils verschiedene für den Bediener relevante Aspekte aus dem egozentrischen und/oder dem exozentrischen Bilddatensatz an die kopfgehaltene Anzeigevorrichtung und/oder die apparategehaltene Anzeigevorrichtung senden.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Apparatur mit einer Bildverarbeitungseinheit;
- Fig. 2: eine schematische Darstellung von Betriebszonen zum Betrieb der Apparatur;
- Fig. 3: eine schematische Darstellung einer beispielhaften Zuordnung von Bilddatensätzen zu einer kopfgehaltenen Anzeigevorrichtung und eine apparategehaltenen Anzeigevorrichtung in Abhängigkeit der Betriebszonen;
- Fig. 4: eine schematische Darstellung einer beispielhaften Zuordnung von Bilddatensätzen zur kopfgehaltenen Anzeigevorrichtung und zur apparategehaltenen Anzeigevorrichtung gemäß dritter Betriebszone;
- Fig. 5: eine weitere schematische Darstellung einer beispielhaften Zuordnung von Bilddatensätzen zur kopfgehaltenen Anzeigevorrichtung und zur apparategehaltenen Anzeigevorrichtung gemäß dritter Betriebszone;
- Fig. 6: eine zusätzliche schematische Darstellung einer beispielhaften Zuordnung von Bilddatensätzen zur kopfgehaltenen Anzeigevorrichtung und zur apparategehaltenen Anzeigevorrichtung gemäß dritter Betriebszone;
- Fig. 7: eine schematische Darstellung einer beispielhaften Zuordnung von Bilddatensätzen zur kopfgehaltenen Anzeigevorrichtung und zur apparategehaltenen Anzeigevorrichtung gemäß zweiter Betriebszone;
- Fig. 8: eine schematische Darstellung einer beispielhaften Zuordnung von Bilddatensätzen zur kopfgehaltenen Anzeigevorrichtung und zur apparategehaltenen Anzeigevorrichtung gemäß erster Betriebszone;
- Fig. 9: eine schematische Darstellung eines Bilddatensatzes mit Bildelementen in mehreren Detailstufen;
- Fig. 10: eine schematische Darstellung eines Bilddatensatzes mit Bildelementen in mehreren überlagerten Detailstufen;
- Fig. 11: eine schematische Darstellung eines Bilddatensatzes mit Unterdatensätzen in mehreren Detailstufen;
- Fig. 12: eine schematische Symboldarstellung eines Objektes;
- Fig. 13: eine schematische Symboldarstellung von Objektgruppen;
- Fig. 14: eine weitere schematische Symboldarstellung von Objektgruppen;
- Fig. 15: eine weitere Symboldarstellung eines Objektes;
- Fig. 16: eine schematische Symboldarstellung eines Objektes für eine Objektgruppe;
- Fig. 17: eine schematische Symboldarstellung einer Objektgruppe mit in Fig. 16 gezeigten Symboldarstellungen von Objekten;
- Fig. 18: eine schematische Symboldarstellung einer Objektgruppe;
- Fig. 19: eine weitere schematische Symboldarstellung der in Fig. 18 gezeigten Objektgruppe;
- Fig. 20: eine zusätzliche schematische Symboldarstellung der in Fig. 18 bis 19 gezeigten Objektgruppe;
- Fig. 21: eine alternative schematische Symboldarstellung der in Fig. 18 bis 20 gezeigten Objektgruppe;
- Fig. 22: eine weitere alternative schematische Symboldarstellung der in Fig. 18 bis 21 gezeigten Objektgruppe;
- Fig. 23: eine zusätzliche alternative schematische Symboldarstellung der in Fig. 18 bis 22 gezeigten Objektgruppe;
- Fig. 24: eine schematische Darstellung von Konstruktionselementen zur Erzeugung einer Symboldarstellung der in Fig. 18 bis 23 gezeigten Objektgruppe;
- Fig. 25: eine schematische Symboldarstellung der in Fig. 18 bis 23 gezeigten Objektgruppe nach Anwendung der in Fig. 24 gezeigten Konstruktionselemente;

### Detaillierte Beschreibung

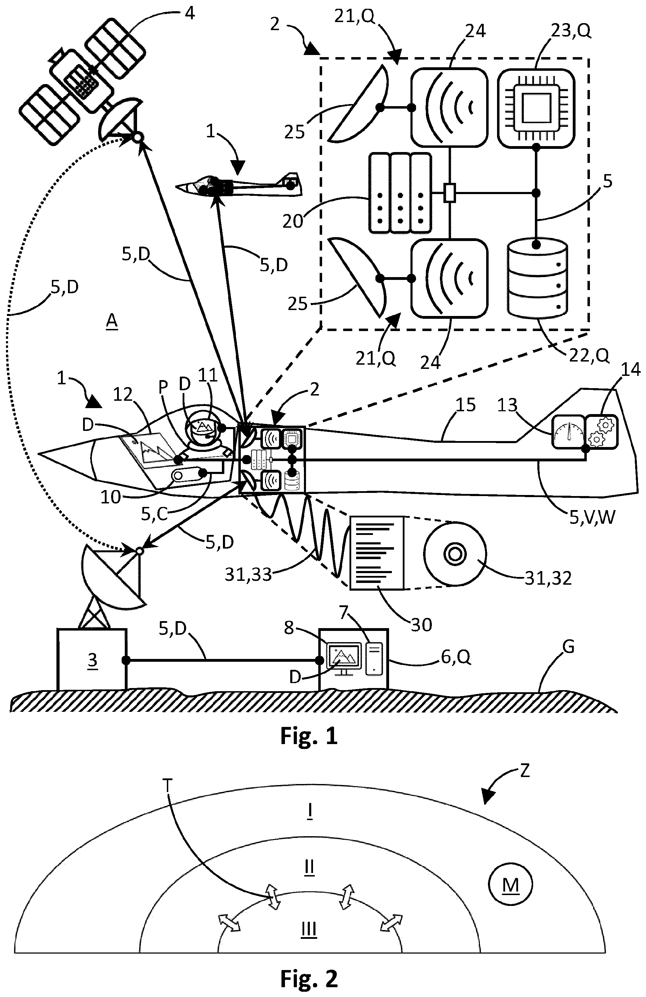

Fig. 1 zeigt eine schematische Darstellung einer Apparatur 1 in Form eines Luftfahrzeugs mit einer Bildverarbeitungseinheit 2, die dazu ausgestaltet sein kann, mit verschiedenen weiteren Vorrichtungen, wie beispielsweise einer weiteren Apparatur 1 in Form eines weiteren Luftfahrzeugs, beispielsweise eines UAV, einer Bodenstation 3 einer und/oder einem Satelliten 4 zu kommunizieren, die von der Bildverarbeitungseinheit 2 als Datenquellen Q für einen Bilddatensatz D genutzt werden können und am Boden G und/oder in der Luft A bzw. im Weltraum angeordnet sein. Die Apparaturen 1, Bodenstationen 3, und/oder Satelliten 4 können über Kommunikationsinfrastrukturen 5 kabelgebunden und/oder kabellos miteinander sowie mit weiteren Datenquellen Q, wie beispielsweise Datenzentren 6 mit Datenverarbeitungsanlagen 7 und deren Anzeigevorrichtungen 8 verbunden sein.. Bedienpersonen bzw. Bediener P, wie beispielsweise ein Pilot eines Luftfahrzeugs, können die Apparaturen 1, Bodenstationen 3, und/oder Satelliten 4 bedienen.

Die Apparatur 1 umfasst wenigstens eine Bedieneinrichtung 10, wenigstens eine kopfgehaltene Anzeigevorrichtung 11 und wenigstens eine apparategehaltene Anzeigevorrichtung 12. Mit Hilfe der Bedieneinrichtung 10 kann der Bediener P Steuersignale C zur Steuerung der Apparatur 1 und/oder der Bildverarbeitungseinheit 2 erzeugen bzw. abgeben. Dazu können die Bedieneinrichtung 10 entsprechende Steuerelemente, wie virtuelle und/oder physische Schalter, Schieber, Regler, Knöpfe, Räder, Zeiger o. ä. umfassen, die binäre, inkrementelle, und/oder stufenlose Steuersignalen C bereitstellen können. Die kopfgehaltene Anzeigevorrichtung 11 kann beispielsweise als HMD bereitgestellt werden. Die apparategehaltene Anzeigevorrichtung kann beispielsweise als Large Area Display (LAD) bereitgestellt werden.

Des Weiteren kann die Apparatur 1 Sensorelemente 13 und/oder Aktoren 14 umfassen, die Sensorsignale V bzw. Stellwerte W, wie beispielsweise Ist- und/oder Sollwerte bereitstellen können. Sämtliche Komponenten der Apparatur 1 sowie der Bediener P können an bzw. in einer Apparatestruktur 15 gehalten, befestigt und/oder aufgenommen sein, wie beispielsweise einem Flugzeugrumpf samt einer Kanzel oder ähnlichem. Die wenigstens eine Bedieneinrichtung 10, wenigstens eine kopfgehaltene Anzeigevorrichtung 11 und/oder wenigstens eine apparategehaltene Anzeigevorrichtung 12 können abermals über Kommunikationsinfrastrukturen 5 kabelgebunden und/oder kabellos miteinander sowie mit weiteren Datenquellen Q, wie beispielsweise Datenzentren 6 mit Datenverarbeitungsanlagen 7 und deren Anzeigevorrichtungen 8 verbunden sein.

Die Bildverarbeitungseinheit 2 kann eine Datenverarbeitungseinrichtung 20, ein Datenübertragungseinrichtung 21, ein Datenbankmodul 22 und/oder ein Sensormodul 23 umfassen, die als Datenquellen Q für Bilddatensätze D dienen können. Die Datenverarbeitungseinrichtung 20 kann den jeweiligen Anforderungen gemäß mit Datenprozessoren und -speichern ausgestattet sein, um Steuersignalen C, Bilddatensätze D, Sensorsignale V und/oder Stellwerte W verarbeiten und/oder bereitstellen zu können. Die Datenübertragungseinrichtung 21 kann Sende- und/oder Empfangsmodule 24 und Sendeempfänger 25 umfassen oder über die Kommunikationsinfrastruktur 5 damit verbunden sein. Die Sendeempfänger 25 können beispielsweise als terrestrische oder nichtterrestrische Antennen der Apparatur 1 und/oder der Bildverarbeitungseinheit 2 bereitgestellt werden, die den jeweiligen Anforderungen gemäß ausgestaltet und angeordnet sein können, damit per Datenfernübertragung Steuersignale C, Bilddatensätze D, Sensorsignale V und/oder Stellwerte W bezogen und/oder bereitstellen zu können.

Ein Steuerprogramm 30 mit Befehlen zur Steuerung der Apparatur 1, der Bildverarbeitungseinheit 2, der Bodenstation 3, des Satelliten 4, der Kommunikationsinfrastruktur 5, des Datenzentrums 6, der Datenverarbeitungsanlage 7 und/oder der Anzeigevorrichtung 8 kann zumindest abschnittsweise auf einem computerlesbaren Datenträger 31 gespeichert sein und einen hierin beschriebene Steuersignale C, Bilddatensätze D, Sensorsignale V und/oder Stellwerte W nebst sonstiger Datensätze, Parameter, Kennzeichnungen, Schlüssel und/oder Verfahrensschritte definieren sowie ihre Erzeugung, Verwendung und/oder Handhabung regeln. Der computerlesbare Datenträger 31 kann als computerlesbares Medium 32 und/oder Datenträgersignal 33 vorliegen. Insbesondere das Datenträgersignal 33 kann über Lichtsignale, Kabelverbindungen sowie sonstige leitungsgebundene und/oder leitungslose Übertragungsmittel der Kommunikationsinfrastruktur 5 sowie Kommunikationsnetzwerke zwischen Apparaturen 1, Bildverarbeitungseinheiten 2, Bodenstationen 3, Satelliten 4 und/oder Datenverarbeitungsanlagen 6 sowie deren jeweiligen Komponenten bidirektional übertragbar ausgestaltet sein.

Fig. 2 zeigt eine schematische Darstellung von Betriebszonen Z zum Betrieb der Apparatur 1, beispielsweise eine erste Betriebszone I, eine zweite Betriebszone II und/oder eine dritte Betriebszone III, mit Übergängen T dazwischen. Bei der ersten Betriebszone I kann es sich beispielsweise um einen Vorbereitungsbereich handeln. Die erste Betriebszone I kann sich beispielsgemäß dadurch auszeichnen, dass sie außerhalb einer Reichweite von Sensoren und/oder Effekttoren eines Missionsziels M während einer gesamten Missionsdauer liegt. Somit werden in der ersten Betriebszone I in der Regel Vorbereitungsmaßnahmen für eine "heiße Phase" eine Mission durchgeführt, wie kurzfristige Datenaktualisierungen, Luftbetankung, Übungen und/oder Planungsaufgaben. Mit der Ausnahme spezieller beispielhafter Aufgaben, wie Luftbetankungen, Starts, Landungen und/oder Formationsflügen, ist in der ersten Betriebszone I eine mit Hilfe von Bilddatensätzen D vermittelte Außenansicht für den Bediener P in der Regel zweitrangig und Sensorsignale V haben eine vorrangige Bedeutung.

Die zweite Betriebszone II kann im vorliegenden Beispiel ein Aufgabenzuteilungsbereich sein und lässt sich von der dritten Betriebszone III dadurch abgrenzen, dass Sensoren und/oder Effekttoren eines Missionsziels die Apparatur 1 bzw. eigene Apparaturen 1 in der Regel nicht erkennen oder erreichen können. Durch eine Relativbewegung der Apparatur 1 zum Missionsziel kann diese Grenze allerdings stets in Bewegung sein. Somit ist die Apparatur 1 ständigem Risiko, sich durch eigene Manöver oder Manöver des Missionsziels M in die dritte Betriebszone III zu geraten. In der zweiten Betriebszone II werden in der Regel Abstandssensoren und Abstandseffektoren eingesetzt sowie weitere Apparaturen 1, beispielsweise in Form ferngesteuerter UAV, beauftragt und/oder gesteuert. Dementsprechend ist auch in der zweiten Betriebszone eine mit Hilfe von Bilddatensätzen D vermittelte Außenansicht für den Bediener P in der Regel zweitrangig und Sensorsignale V haben eine vorrangige Bedeutung.

Die dritte Betriebszone III beinhaltet im vorliegenden Beispiel das Missionsziel M. Grenzen der dritten Betriebszone III zeichnen sich somit damit aus, dass die Apparatur 1 sich in Reichweite von Sensoren und Effekttoren des Missionsziels M befindet. Es ist allerdings notwendig, mit der Apparatur 1 in die dritte Betriebszone III einzutreten, um das Missionsziel M zu erfüllen. Somit müssen sich Apparatur 1 und/oder Bediener P mit dem Missionsziel M verbundenen Risiken stellen, wie beispielsweise detektiert, attackiert und/oder sonstigen schädlichen Einflüssen, wie beispielsweise gewissen Umwelteinflüssen, ausgesetzt zu sein. Eine Risikosituation kann sich in der dritten Betriebszone III stets ändern. Eine unmittelbare Einleitung von Gegenmaßnahmen kann erforderlich sein, um Risiken abzuwenden. Eine Erreichung des Missionsziels M in möglichst kurzer Zeit kann gegenüber etwaigen Planungsaufgaben zu priorisieren sein. Dementsprechend kann die dritte Betriebszone III auch als Aktionsbereich bezeichnet werden. Eine Außenansicht mithilfe von Sensorsignalen V, Datensätzen D und/oder direktem Ausblick kann für den Bediener P in der dritten Betriebszone III von größter Wichtigkeit sein, um das Missionsziel M unbeschadet zu erreichen.

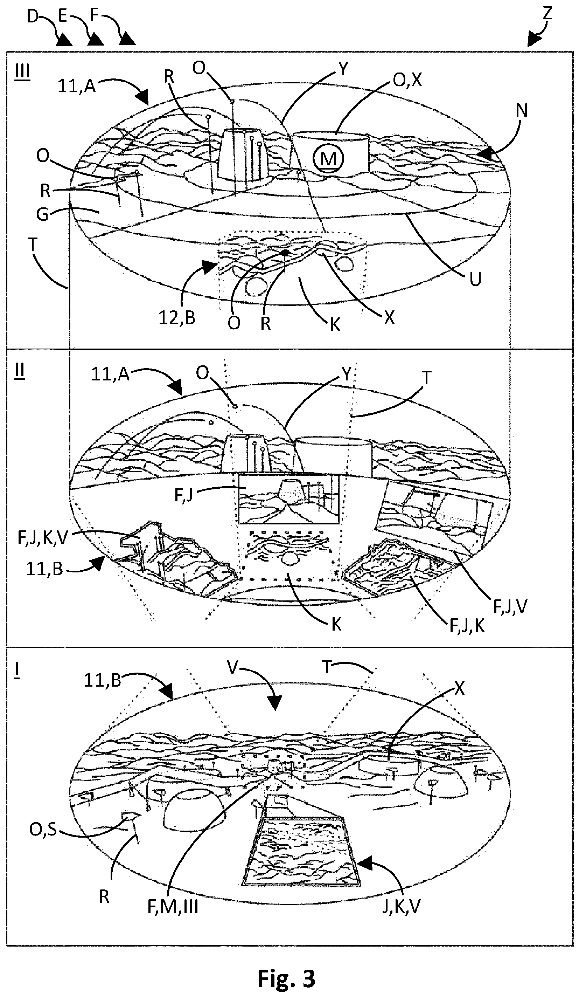

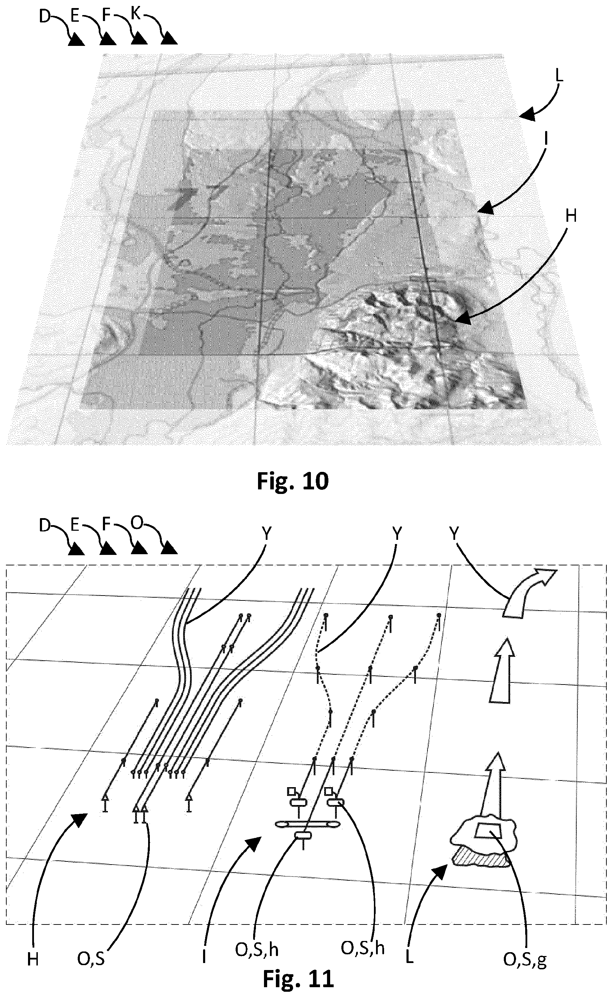

Fig. 3 zeigt eine schematische Darstellung einer beispielhaften Zuordnung von Bilddatensätzen D zur kopfgehaltenen Anzeigevorrichtung 11 und zur apparategehaltenen Anzeigevorrichtung 12 in Abhängigkeit der Betriebszonen Z. Die Bilddatensätze D können Bildelemente E umfassen, die jeweils auf einem Unterdatensatz F basieren können. Mit anderen Worten können die Bilddatensätze D und/oder Bildelemente E aus Unterdatensätzen F zusammengesetzt sein, die von der Bildverarbeitungseinheit 2 bezogen, verarbeitet und/oder ausgegeben werden können. Die Bildelemente E bzw. Unterdatensätze F können Objektgruppen g, Untergruppen h (s. Fig. 11 bis 25), Kartendatensätze K, Objekte O, Bezugsdatensätze R, Symboldarstellungen S, Übergänge T, Umkreise U, Sensorsignale V, Stellwerte W, Gefahrenbereiche X und/oder Trajektorien Y umfassen, die zu egozentrischen Bilddatensätzen A und/oder exozentrischen Bilddatensätzen B zusammengesetzt sein können.

So kann in einer an die dritte Betriebszone III angepassten Darstellung ein egozentrischer Bilddatensatz A an die kopfgehaltene Anzeigevorrichtung 11 und ein exozentrischer Datensatz B an die apparategehaltene Anzeigevorrichtung 12 gesendet werden. Mithilfe des egozentrischen Bilddatensatzes A kann beispielsweise eine augmentierte natürliche Ansicht N des Bedieners P (s. Fig. 1) bereitgestellt werden. Die natürliche Ansicht N kann durch eine zumindest teilweise Transparenz der kopfgehalten Anzeigevorrichtung 11 ermöglicht sein.

Insbesondere können im egozentrischen Bilddatensatz A beispielsweise Objekte O mit Bezugsdatensätzen R, Gefahrenbereichen X, Trajektorien Y und/oder Umkreisen bzw. Abstandsdatensätzen U versehen sein. Mithilfe der Bezugsdatensätze R kann beispielsweise ein Objekt O einerseits in der natürlichen Ansicht N gegenüber dem Boden G referenziert sein. Andererseits lassen sich mithilfe der Bezugsdatensätze R im egozentrischen Bilddatensatz A und exozentrischen Bilddatensätze B gleichzeitig enthaltene Unterdatensätze F, beispielsweise selbe Elemente E und/oder Objekte O referenzieren bzw. einander zuordnen. Gefahrenbereiche X können ähnlich wie Umkreise U um Objekte O herum angeordnet sein, wie beispielsweise um das Missionsziel M herum. Derartige Gefahrenbereiche X können Reichweiten von Detektoren und/oder Reflektoren wiedergeben helfen. Trajektorien Y können vergangene oder zukünftige bzw. erwartete Bewegungsbahnen, wie Flugbahn, oder dergleichen, von Objekten O wiedergeben helfen.

Aus dem egozentrischen Bilddatensatz A kann der exozentrische Bilddatensatz B ausgeschnitten bzw. komplementär dazu sein, sodass die apparategehalten Anzeigevorrichtung 12 den Bediener P möglichst von der kopfgehalten Anzeigevorrichtung 11 unbeeinträchtigt erscheint. Der exozentrische Bild Datensatz B kann beispielsweise einen Kartendatensatz K beinhalten und/oder auf einem solchen beruhen. In den Kartendatensatz K können ausgewählte Objekte O eingebettet sein. Somit vereinfacht der an die apparategehaltene Anzeigevorrichtung 11 gesendete exozentrische Bilddatensatz B es den Bediener P, eine generelle Übersicht über seine Position und das Geschehen zu behalten.

In einer an die zweite Betriebszone II angepassten Darstellung kann im vorliegenden Beispiel sowohl ein egozentrischer Bilddatensatz A als auch ein exozentrischer Bilddatensatz B an die kopfgehaltene Anzeigevorrichtung 11 gesendet werden. Beispielsweise kann der egozentrisch Bilddatensatz A zumindest abschnittsweise dem egozentrischen Bilddatensatz A entsprechen, der in der dritten Betriebszone III an die kopfgehaltene Anzeigevorrichtung 11 gesendet wird. Hingegen kann der exozentrische Bilddatensatz B beispielsweise die apparategehaltene Anzeigevorrichtung 12 überblenden. So kann der exozentrische Bilddatensatz B gemäß vorliegendem Beispiel eine Vielzahl von Kartendatensätzen K mit verschiedenen Perspektiven J bzw. Kartenausschnitten als Unterdatensätze F beinhalten, in die je nach Erfordernis Sensorsignale V von Objekten O bzw. entsprechende Unterdatensätze eingebettet sein können. Um dem Bediener P ein kognitives Nachverfolgen des Übergangs von einer Darstellung in der dritten Betriebszone III zu einer Darstellung in der zweiten Betriebssonne II zu vereinfachen, kann zum Beispiel wenigstens ein Unterdatensatz F aus der apparategehalten Anzeigevorrichtung 12, wie beispielsweise ein Kartendatensatz K, in einer stufenlosen flüssigen Bewegung in den an die kopfgehaltene Anzeigevorrichtung 11 gesendeten exozentrischen Datensatz B überführt werden.

In der ersten Betriebszone I kann beispielsweise die gesamte apparategehaltene Anzeigevorrichtung 12 von der kopfgehaltenen Anzeigevorrichtung 11 durch wenigstens einen exozentrisch Bilddatensatz B überblendet sein. Im vorliegenden Beispiel kann dieser exozentrische Bilddatensatz B beispielsweise vollständig aus Sensorsignalen V und/oder Kartendatensätzen K synthetisiert sein. Das Missionsziel M und/oder die dritte Betriebszone III können beispielsweise durch einen entsprechenden unter Unterdatensatz F grob umrissen sein. Weitere Kartendatensätze K und/oder Sensordatensätze V können als gesonderte Perspektiven J in den exozentrischen Bilddatensatz B eingebettet sein. Um dem Bediener P ein kognitives Nachverfolgen des Übergangs von einer Darstellung in der zweiten Betriebszone II zu einer Darstellung in der ersten Betriebssonne I zu vereinfachen, kann zum Beispiel abermals wenigstens ein Unterdatensatz F aus der apparategehalten Anzeigevorrichtung 12, wie hier beispielsweise die Markierung der dritten Betriebszone III, in einer stufenlosen flüssigen Bewegung in den auf Sensorsignalen V basierenden an die kopfgehaltene Anzeigevorrichtung 11 gesendeten exozentrischen Datensatz B überführt werden.

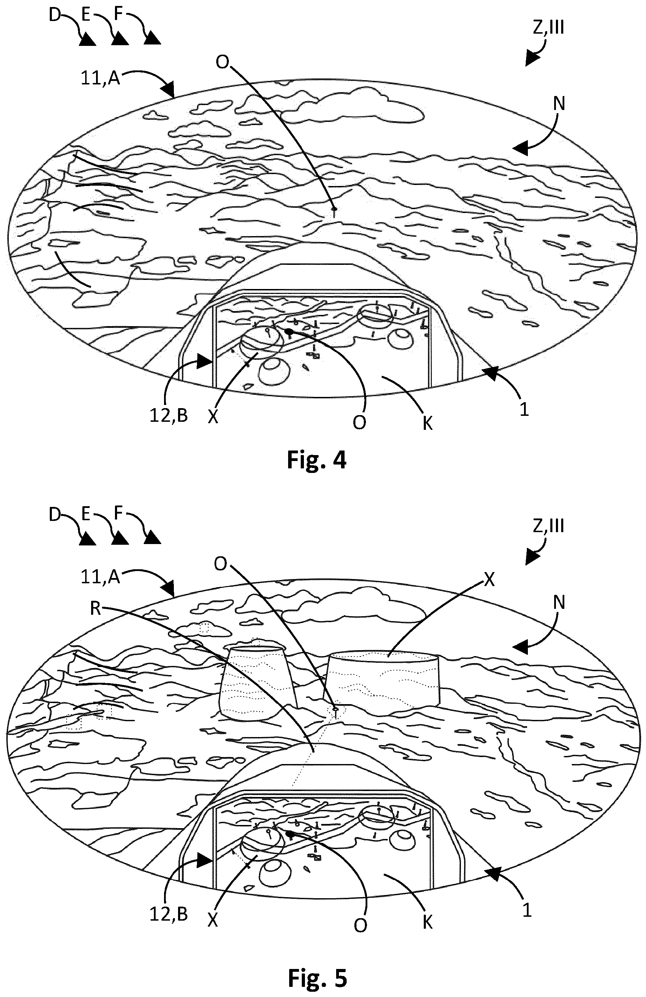

Fig. 4 zeigt eine schematische Darstellung einer beispielhaften Zuordnung von Bilddatensätzen D zur kopfgehaltenen Anzeigevorrichtung 11 und zur apparategehaltenen Anzeigevorrichtung 12 gemäß dritter Betriebszone III. Zum Augmentieren der natürlichen Ansicht N kann beispielsweise ein Objekt O als Unterdatensatz F darin eingebettet sein und dazu wenigstens als Teil eines egozentrischen Bilddatensatzes A an die kopfgehaltene Anzeigevorrichtung 11 gesendet werden. Der an die apparategehaltene Anzeigevorrichtung 12 gesendete exozentrische Bilddatensatz B kann auf einem Kartendatensatz klar basieren, in den entsprechende Unterdatensätze F des Objektes O sowie beispielsweise eines Gefahrenbereiches X eingebettet sein können.

Fig. 5 zeigt eine weitere schematische Darstellung einer beispielhaften Zuordnung von Bilddatensätzen D zur kopfgehaltenen Anzeigevorrichtung 11 und zur apparategehaltenen Anzeigevorrichtung 12 gemäß dritter Betriebszone III. Im Unterschied zur in Fig. 4 gezeigten Darstellung ist in Fig. 5 beispielsweise der Gefahrenbereich X als Unterdatensatz F des an die kopfgehaltene Anzeigevorrichtung 11 gesendeten egozentrischen Datensatzes A ebenfalls als Unterdatensatz F in dem an die apparategehaltene Anzeigevorrichtung 12 gesendeten exozentrischen Datensatz B enthalten. Ein Referenzdatensatz R , beispielsweise in Form einer Verbindungslinie, oder ähnlichem, verbindet entsprechende Unterdatensätze F im egozentrischen Datensatz A und exozentrisch in Datensatz B miteinander, sodass diese für den Bediener P in der kopfgehaltenen Anzeigevorrichtung 11 bzw. der apparategehalten Anzeigevorrichtung 12 gleichzeitig erscheinend in Bezug zueinander stehen.

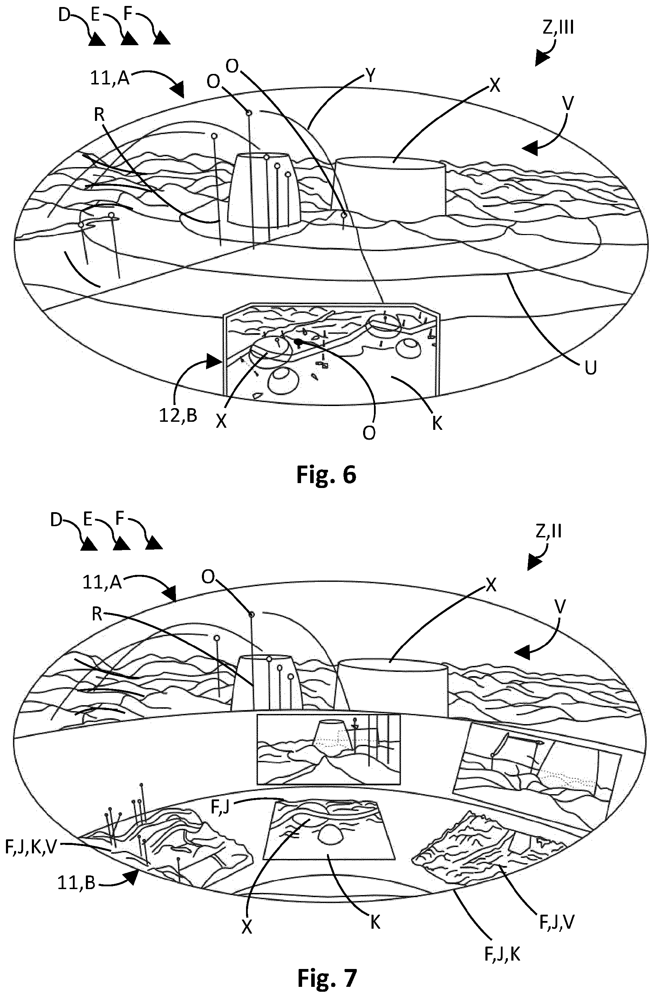

Fig. 6 zeigt eine zusätzliche schematische Darstellung einer beispielhaften Zuordnung von Bilddatensätzen D zur kopfgehaltenen Anzeigevorrichtung 11 und zur apparategehaltenen Anzeigevorrichtung 12 gemäß dritter Betriebszone III. Im Unterschied zur in Fig. 5 gezeigten Darstellung ist in Fig. 6 beispielsweise die natürliche Ansicht N vollständig von einer auf Sensorsignalen V basierenden Darstellung ersetzt. Somit ist beispielsweise ein für den Bediener P sichtbarer Bereich der Apparatur 1 wenigstens um die apparategehaltene Anzeigevorrichtung 12 herum überblendet. Mit anderen Worten ist der an die apparategehalte Anzeigevorrichtung 12 gesendete exozentrische Bilddatensatz B in den an die kopfgehaltene Anzeigevorrichtung 11 gesendeten egozentrischen Bilddatensatz 12 eingebettet. Zusätzliche Objekte O sowie Bezugsdatensätze R können in den egozentrischen Datensatz A eingebettet sein.

Fig. 7 zeigt eine schematische Darstellung einer beispielhaften Zuordnung von Bilddatensätzen D zur kopfgehaltenen Anzeigevorrichtung 11 und zur apparategehaltenen Anzeigevorrichtung 12 gemäß zweiter Betriebszone II. Im Unterschied zur in Fig. 6 gezeigten Darstellung gemäß dritter Betriebszone III ist in Fig. 7 beispielsweise unterhalb der auf Sensorsignalen V basierenden Darstellung, welche die natürliche Ansicht N ersetzt, ein exozentrischer Bilddatensatz B eingebettet. Dieser exozentrisch Bilddatensatz B kann eine Reihe von verschiedenen Unterdatensätzen F, insbesondere Kartendatensätzen K mit verschiedenen Perspektiven J, Sensorsignalen V, usw., beinhalten.

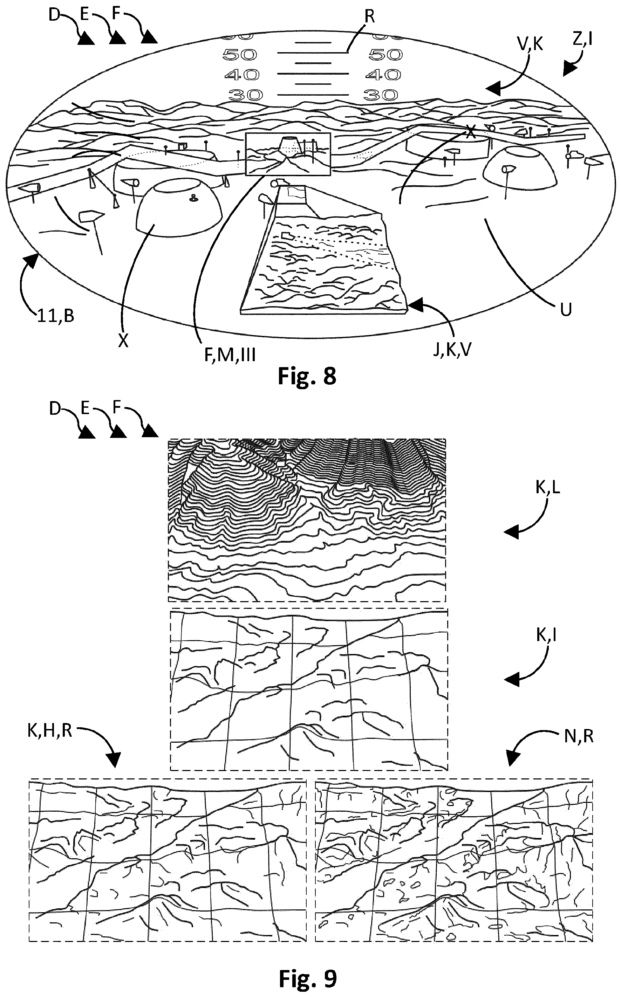

Fig. 8 zeigt eine schematische Darstellung einer beispielhaften Zuordnung von Bilddatensätzen D zur kopfgehaltenen Anzeigevorrichtung 11 und zur apparategehaltenen Anzeigevorrichtung 12 gemäß erster Betriebszone I. Im Unterschied zur in Fig. 7 gezeigten Darstellung gemäß zweiter Betriebszone II ist in Fig. 8 beispielsweise der gesamte egozentrische Bilddatensatz A durch einen exozentrischen Bilddatensatz B auf Basis von Kartendatensätzen K und/oder Sensorsignalen V ersetzt. Dieser exozentrisch Bilddatensatz B kann eine Reihe von verschiedenen Unterdatensätzen F, wie beispielsweise weitere Kartendatensätze K mit anderen Perspektiven J, Sensorsignalen V, Kennzeichnungen der zweiten Betriebszone II und/oder dritten Betriebszone III, usw., beinhalten. Zur verbesserten Orientierung des Bedieners P können in einen solchen rein synthetischen exozentrischen Bilddatensatz B als Orientierungshilfen Bezugsdatensätze R, wie hier beispielsweise ein künstlicher Horizont eingeblendet sein.

Fig. 9 zeigt eine schematische Darstellung eines Bilddatensatzes D mit Bildelementen W in mehreren Detailstufen. So können beispielsweise Unterdatensätze F auf Kartendatensätzen K mit verschiedenen Detailstufen basieren. Hier ist entsprechend ein Kartendatensatz K in einer hohen Detailstufe H, einer mittleren Detailstufen I und einer niedrigen Detailstufe L gezeigt, der vor einer entsprechenden natürlichen Ansicht N eines Geländeabschnitts basiert, die mit einem Referenzdatensatz R Form eines Rasters versehen sein kann. Die hohe Detailstufe H kann im Bilddatensatz D beispielsweise enthaltende Einzelheiten der natürlichen Ansicht N möglichst detailgetreu wiedergeben. In der mittleren Detailstufe I kann der Bilddatensatz D beispielsweise auf eine grob naturgetreue Darstellung des Geländes reduziert sein. Die niedrige Detailstufe L kann das Gelände beispielsweise auf Reliefs reduzieren.

Fig. 10 zeigt eine schematische Darstellung eines Bilddatensatzes D mit Bildelementen E in mehreren überlagerten Detailstufen. So enthält der Bilddatensatz D hier beispielsweise Unterdatensätze F, die auf einem Kartendatensatz K basieren. Die Bildelemente E dieses Kartendatensatzes K sind in der hohen Detailstufe H, der mittleren Detailstufen I und der niedrigen Detailstufe L sich gleichzeitig überlagernd Bilddatensatz D enthalten.

Fig. 11 zeigt eine schematische Darstellung eines Bilddatensatzes D mit Unterdatensätzen D in mehreren Detailstufen. So sind hier Symboldarstellungen S von Objekten O sowie deren Trajektorien Y in der hohen Detailstufe H, der mittleren Detailstufen I und der niedrigen Detailstufen L gezeigt. In der hohen Detailstufe H können die Objekte O und deren Trajektorie Y alle einzeln im Bild Datensatz D enthalten sein, abschnittsweise in Form entsprechender Unterdatensätze Z, die jeweils ein Bildelement E abbilden können. In der mittleren Detailstufen I kann eine gewisse Anzahl der Objekte in Untergruppen h zusammengefasst sein, die dann jeweils entsprechende Trajektorien Y aufweisen. In der niedrigen Detailstufen I können sämtliche Untergruppen h zu einer Gruppe g zusammengefasst sein, die eine entsprechende Trajektorie Y besitzt.

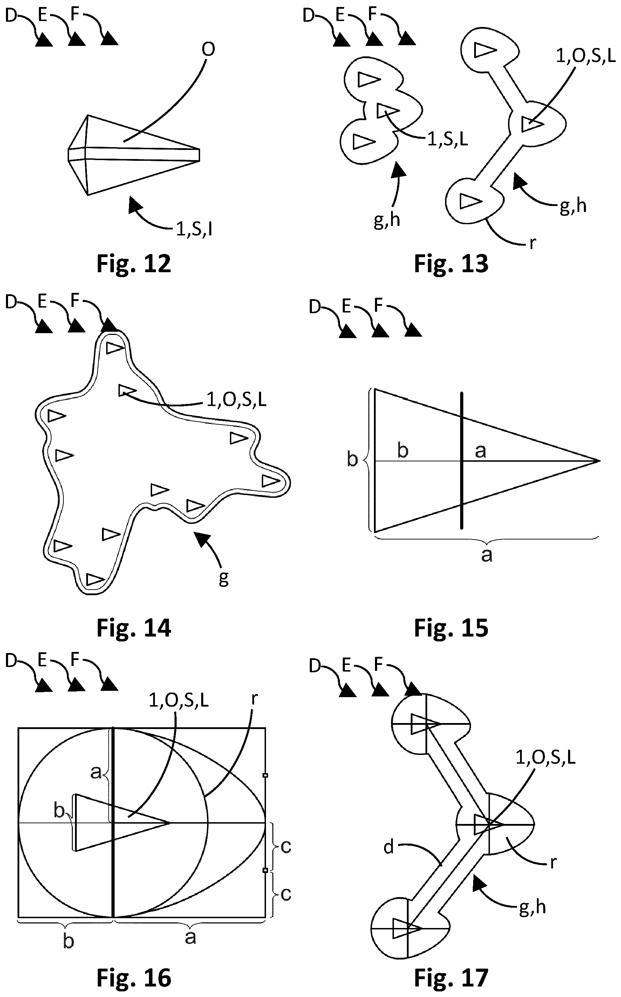

Fig. 12 zeigt eine schematische Symboldarstellung S eines Objektes O. Beispielsweise kann es sich bei dem Objekt O um die Apparatur 1 in Form eines Luftfahrzeugs handelt. Die Symboldarstellung S der Apparatur 1 abstrahiert diese so weit, dass beispielsweise ihr Bug und Heck unter gewissen dreidimensionalen Andeutungen abgebildet werden.

Fig. 13 zeigt eine schematische Symboldarstellung von Objektgruppen g. Beispielsweise können die Objektgruppen g als eine Vielzahl von Untergruppen h in ein Bilddatensatz D mit aufgenommen werden. Die gezeigte zwei Untergruppen h können beispielsweise jeweils einen Unterdatensatz F des Bilddatensatzes D darstellen. In den Untergruppen h können die Objekte O beispielsweise in niedrigster Detailstufen L enthalten sein, wo die im Fall der hier beispielsweise als Objekt O herangezogenen Apparatur 1 in Form eines Luftfahrzeugs allenfalls noch dessen Bug und Heck in einer zweidimensionalen Darstellung erkennbar ist. In den Untergruppen h können die Objekte O mit einzelnen Objektradien r versehen sein.

Fig. 14 zeigt eine weitere schematische Symboldarstellung S von einer einzelnen Objektgruppe g. In dieser Objektgruppe O ist eine Vielzahl Objekten O beispielhaft in niedrigster Detailstufen L enthalten. Eine Zuordnung der Objektes Untergruppen h ist nicht vorgesehen. Einzelne Objektradien r nicht vorhanden.

Fig. 15 zeigt eine weitere Symboldarstellung S eines Objektes O. Die Symboldarstellung S des Objektes O kann mit einer Symbollänge a und einer Symbolbreite b konstruiert sein. Die Symbolbreite b kann kleiner als die Symbollänge a sein, damit eine Dreieck- oder pfeilspitzenartige Darstellung bereitgestellt werden kann.

Fig. 16 zeigt eine schematische Symboldarstellung eines Objektes für eine Objektgruppe g und/oder Untergruppe h. So kann beispielsweise der Symbolradius r der Symbollänge a entsprechen und um ein Symbolzentrum herum gelegt sein. Zur Symbolspitze hin kann der Symbolradius r erweitert sein, beispielsweise indem er von der Symbolspitze aus Symbollänge a entspricht, wobei für die Konstruktion der Symbolradien r auch Teillängen c verwendet werden können, die auf beispielsweise auf vordefinierten Bruchteilen der Symbollänge A, der Symbolbreite B und/oder des Radius r beruhen können.

Fig. 17 zeigt eine schematische Symboldarstellung einer Objektgruppe mit in Fig. 16 gezeigten Symboldarstellungen S von Objekten O. Hier sind die Objekte O in einer Objektgruppe g oder Untergruppe h zusammengefasst. Zur zusammengefassten Abbildung der Objekte O können beispielsweise ihre Projektradien r durch Symboldistanzen d überbrückt abgebildet sein.

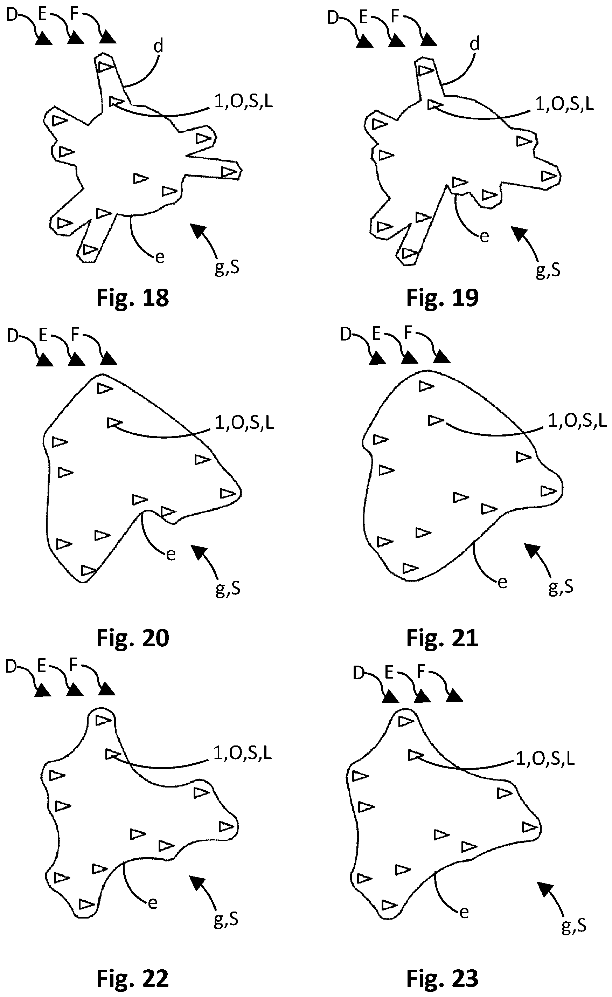

Fig. 18 zeigt eine schematische Symboldarstellung S einer Objektgruppe g. Die ganze Objektgruppe g ist durch eine Hüllkurve e zusammengefasst abgebildet. Die Hüllkurve e kann anhand von Schnittlinien zwischen den Objekten O gebildet sein und im Bereich der ausliegenden Objekte O Symboldistanzen mit abbilden.

Fig. 19 zeigt eine weitere schematische Symboldarstellung S der in Fig. 18 gezeigten Objektgruppe g. Im Unterschied zur in Fig. 18 gezeigten Darstellung ist liegt die Hüllkurve e näher am zentralen Objekt O an. Hingegen sind bei äußeren Objekten O Symboldistanzen d gekürzt.

Fig. 20 zeigt eine zusätzliche schematische Symboldarstellung der in Fig. 18 bis 19 gezeigten Objektgruppe g. Hier ist die Hüllkurve e beispielsweise mithilfe eines Algorithmus gebildet, der einen Basis-Spline nutzt. Somit werden keinerlei Objektdistanzen d mit abgebildet.

Fig. 21 zeigt eine alternative schematische Symboldarstellung S der in Fig. 18 bis 20 gezeigten Objektgruppe g. Auch hier ist die Hüllkurve e beispielsweise mithilfe eines Algorithmus gebildet, der einen Basis-Spline nutzt. Somit werden abermals keinerlei Objektdistanzen d mit abgebildet.

Fig. 22 zeigt eine weitere alternative schematische Symboldarstellung S der in Fig. 18 bis 21 gezeigten Objektgruppe g. Hier ist die Hüllkurve e beispielsweise mithilfe eines Algorithmus gebildet, der Connolly-Flächen nutzt. Es werden keinerlei Objektdistanzen d mit abgebildet.

Fig. 23 zeigt eine zusätzliche alternative schematische Symboldarstellung der in Fig. 18 bis 22 gezeigten Objektgruppe. Auch hier ist die Hüllkurve e beispielsweise mithilfe eines Algorithmus gebildet, der Connolly-Flächen nutzt. Es werden abermals keinerlei Objektdistanzen d mit abgebildet.

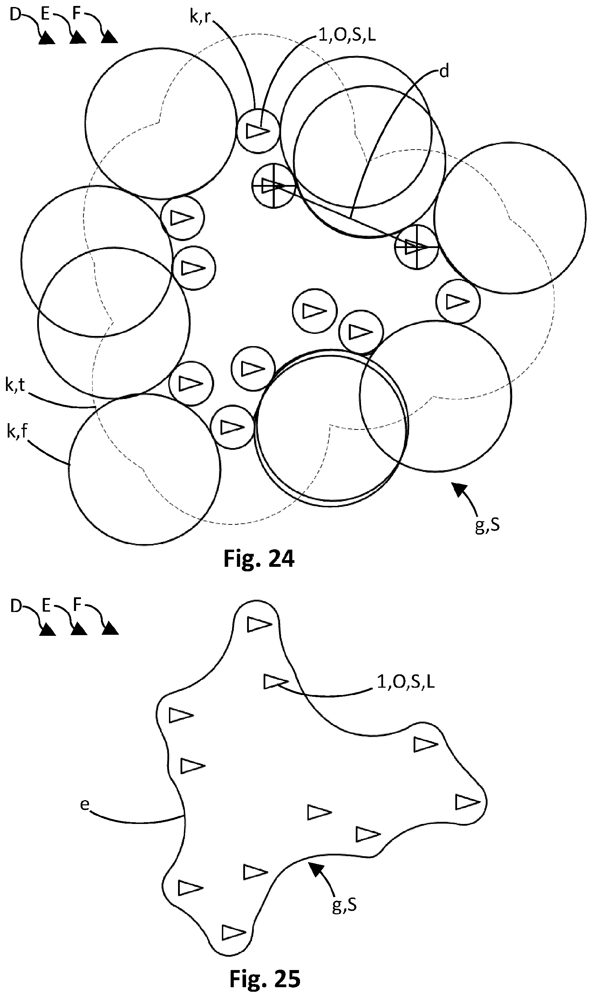

Fig. 24 zeigt eine schematische Darstellung von Konstruktionselementen k zur Erzeugung einer Symboldarstellung S der in Fig. 18 bis 23 gezeigten Objektgruppe g. Konstruktionselemente f können beispielsweise den Symbolradius r der einzelnen Objekte O, einen Fühler f und/oder eine Bahnkurve t umfassen. So kann die Objektgruppe g mit dem Fühler f, der einen entsprechenden Radius aufweisen kann, außen entlang der Radii r der Objekte abgefahren werden, wo beispielsweise ein Zentrum des Fühlers die Bahnkurve t einzeichnen kann.

Fig. 25 zeigt eine schematische Symboldarstellung der in Fig. 18 bis 23 gezeigten Objektgruppe nach Anwendung der in Fig. 24 gezeigten Konstruktionselemente k. Der Unterdatensatz F der als Bildelement E durch die Hüllkurve e gebildet ist, kann mithilfe der Bahnkurve t des Fühlers f berechnet sein. Auf diesem Wege lässt sich ein Algorithmus bereitstellen, der Connolly-Flächen nutzt, um die Symboldarstellung S der Gruppe g zu bilden.

### Bezugszeichenliste

- 1: Apparatur / Luftfahrzeug
- 2: Bildverarbeitungseinheit
- 3: Bodenstation
- 4: Satellit
- 5: Kommunikationsinfrastruktur
- 6: Datenzentrum
- 7: Datenverarbeitungsanlage
- 8: Anzeigevorrichtung

- 10: Bedieneinrichtung
- 11: kopfgehaltene Anzeigevorrichtung
- 12: apparategehaltene Anzeigevorrichtung
- 13: Sensorelement
- 14: Aktor
- 15: Apparatestruktur

- 20: Datenverarbeitungseinrichtung
- 21: Datenübertragungseinrichtung
- 22: Datenbankmodul
- 23: Sensormodul
- 24: Sende- und/oder Empfangsmodul
- 25: Sendeempfänger

- 30: Steuerprogramm
- 31: Computerlesbarer Datenträger
- 32: Computerlesbares Medium
- 33: Datenträgersignal

- I: erste Betriebszone
- II: zweite Betriebszone
- III: dritte Betriebszone

- a: Symbollänge
- b: Symbolbreite
- c: Teillänge
- d: Symboldistanz
- e: Höhe Kurve
- f: Fühler
- g: Objektgruppe / Gruppierungsdatensatz
- h: Untergruppe
- k: Konstruktionselement
- r: Symbolradius
- t: Bahnkurve

- A: egozentrischer Bilddatensatz
- B: exozentrischer Bilddatensatz
- C: Steuersignal
- D: Bilddatensatz
- E: Bildelement
- F: Unterdatensatz
- G: Boden
- H: Hohe Detailstufe
- I: Mittlere Detailstufe
- J: Perspektive
- K: Kartendatensatz
- L: Niedrige Detailstufe
- M: Missionsziel
- N: natürliche Ansicht
- O: Objekt
- P: Bediener/Bedienperson
- Q: Datenquelle
- R: Bezugsdatensatz / Referenzierungsm ittel
- S: Symboldarstellung
- T: Übergang
- U: Umkreis / Abstandsdatensatz
- V: Sensorsignal
- W: Stellwert
- X: Gefahrenbereich
- Y: Trajektorie
- Z: Betriebszone

## Patentansprüche

1. Verfahren zum Bereitstellen eines Bilddatensatzes (D) von einer Bildverarbeitungseinheit (2) einer Apparatur (1), wie beispielsweise eines Luftfahrzeugs, an wenigstens eine Anzeigevorrichtung (11, 12) für Bediener (P) der Apparatur (1),
wobei der Bilddatensatz (D) wenigstens zwei Detailstufen (H, **I,** L) wenigstens eines von einem Sensormodul (23), einem Datenbankmodul (22), und/oder einem Empfangsmodul (24) bezogenen Bildelementes (E) umfasst.

2. Verfahren nach Anspruch 1, **dadurch gekennzeichnet, dass** das wenigstens eine Bildelement (E) Teil eines Unterdatensatzes (F) ist, der aus einem Datenspeicher, vom Sensormodul (23) und/oder per Datenfernübertragung bezogen wird.

3. Verfahren nach Anspruch 2, **dadurch gekennzeichnet, dass** das wenigstens eine Bildelement (E) in mindestens einer der wenigstens zwei Detailstufen (H, **I,** L) zu einer Symboldarstellung (S) abstrahiert wird.

4. Verfahren nach Anspruch 3, **dadurch gekennzeichnet, dass** mindestens eine der wenigstens zwei Detailstufen (H, **I,** L) mindestens eine andere der wenigstens zwei Detailstufen (H, **I,** L) wenigstens abschnittsweise überblendet.

5. Verfahren nach wenigstens einem der Ansprüche 1 bis 4, **dadurch gekennzeichnet, dass** die wenigstens zwei Detailstufen (H, **I,** L) vorgegeben inkrementiert sind.

6. Verfahren nach wenigstens einem der Ansprüche 1 bis 5, **dadurch gekennzeichnet, dass** vom Sensormodul erfasste Objekte (O), Objektgruppen (g) und/oder deren Routen bzw. Trajektorien (Y) in mindestens einer der wenigstens zwei Detailstufen (H, **I,** L) als einzelnes und/oder zusammengefasstes Bildelement (E) bereitgestellt werden.

7. Steuerprogramm (30), umfassend Befehle, die bei der Ausführung des Steuerprogramms (30) durch eine Bildverarbeitungseinheit (2) diese veranlassen, ein Verfahren nach wenigstens einem der Ansprüche 1 bis 6 auszuführen.

8. Computerlesbarer Datenträger (31, 32, 33), auf dem ein Steuerprogramm nach (30) Anspruch 7 gespeichert ist.

9. Bildverarbeitungseinheit (2) für eine Apparatur (1), wie beispielsweise ein Luftfahrzeug, **dadurch gekennzeichnet, dass** sie zur Durchführung eines Verfahrens nach wenigstens einem der Ansprüche 1 bis 6 ausgestaltet ist und/oder einen computerlesbaren Datenträger (31, 32, 33) nach Anspruch 8 umfasst.

10. Apparatur (1), insbesondere ein Luftfahrzeug, **dadurch gekennzeichnet, dass** sie eine Bildverarbeitungseinheit (2) nach Anspruch 9 umfasst.
